Europäisches Patentamt

European Patent Office

Office européen des brevets

(19)

(11) EP 0 574 330 B1

(12) **FASCICULE DE BREVET EUROPEEN**

(45) Date de publication et mention
de la délivrance du brevet:
**15.04.1998 Bulletin 1998/16**

(51) Int Cl.⁶: **G05B 19/423**, A61B 19/00

(21) Numéro de dépôt: **93420188.0**

(22) Date de dépôt: **10.05.1993**

(54) **Robot de guidage de gestes et procédé de commande**

Roboter zur Bewegungsführung und zugehöriges Steuerungsverfahren

Robot for guiding movements and control method

(84) Etats contractants désignés:
**DE**

(30) Priorité: **12.05.1992 FR 9206150**

(43) Date de publication de la demande:
**15.12.1993 Bulletin 1993/50**

(73) Titulaire: **UNIVERSITE JOSEPH FOURIER**
**F-38041 Grenoble Cédex (FR)**

(72) Inventeurs:
- **Lavallee, Stéphane**
  **F-38000 Grenoble (FR)**
- **Troccaz, Jocelyne**
  **F-38320 Eybens (FR)**

(74) Mandataire: **de Beaumont, Michel**
**1bis, rue Champollion**
**38000 Grenoble (FR)**

(56) Documents cités:
**EP-A- 0 326 768          EP-A- 0 333 874**
**EP-A- 0 427 358          EP-A- 0 456 103**
**US-A- 4 831 232**

- **ANNUAL INTERNATIONAL CONFERENCE OF THE IEEE ENGINEERING IN MEDICINE AND BIOLOGY SOCIETY, vol. 12, no. 5, 1990, USA, pages 1933-1935, R.H. TAYLOR ET AL**
- **PROCEEDINGS OF THE INSTITUTION OF MECHANICAL ENGINEERS. JOURNAL OF ENGINEERING IN MEDICINE., PART H, vol. 205, no. H1, 1991, LONDON, GB, pages 35-38, B.L. DAVIES ET AL**

## Description

La présente invention concerne les robots commandés par un système informatique pour faire suivre à un outil solidaire d'un bras de robot une trajectoire mémorisée.

De nombreux robots peuvent déplacer un outil, tel qu'une fraise, une torche à souder... selon une trajectoire précise prémémorisée. Pour déplacer un outil selon n degrés de liberté, il faut un robot d'au moins n axes. Un degré de liberté correspond à un mouvement de translation ou de rotation selon un axe d'un référentiel tridimensionnel. Avec 6 degrés de liberté, toutes les combinaisons de translation et de rotation d'un outil sont possibles (l'outil peut être positionné n'importe où selon n'importe quelle orientation à l'intérieur d'un champ d'action du robot). La relation entre les variables articulaires (les angles de rotation des axes du robot) et la position et l'orientation de l'outil s'écrit :

$$P = f(A)$$

où P est un vecteur dont les composantes représentent les coordonnées de position $x_i$ (i=1...3) et d'orientation $r_i$ (i=1...3) de l'outil, où A est un vecteur dont les composantes représentent les variables articulaires $a_j$ (j=1... 6), et où f est une fonction vectorielle.

Une petite variation dA des variables articulaires autour du vecteur A est alors liée à une petite variation dP du vecteur de position par la relation

$$dP = [J(A)] \, dA,$$

où [J(A)] est une matrice jacobienne dont les coefficients sont des fonctions des composantes du vecteur A.

Vu la précision des trajectoires obtenues par des robots, on serait tenté de les utiliser en chirurgie. Toutefois, les robots actuels, lorsqu'ils sont en mouvement, présentent des dangers qui les rendent inapplicables à la chirurgie. En effet, en cas de défaillance du circuit de commande d'un moteur du robot ou tout simplement à cause de parasites sur le secteur tels qu'une brève interruption de courant, le robot pourrait effectuer un geste incontrôlé de grande amplitude et de puissance considérable qui mettrait gravement en danger un patient subissant un acte chirurgical déterminé par le robot.

Actuellement, on utilise en chirurgie des robots seulement pour des opérations de prépositionnement, ces robots étant bloqués lors du traitement chirurgical. Par exemple, un traitement neuro-chirurgical consiste à enfoncer une aiguille dans le cerveau à une position très précise (Voir le document EP-A- 0 326 768). Pour cela, on utilise un robot qui positionne un cylindre de guidage de l'aiguille de façon précise par rapport à la tête du patient à l'aide d'un système permettant de repérer la position de la tête. Une fois que le cylindre de guidage est positionné (suffisamment loin du patient pour qu'un geste incontrôlé du robot ne puisse pas l'atteindre), les axes du robot sont bloqués et son alimentation est coupée. Après cela, le chirurgien enfonce l'aiguille de façon souhaitée dans le cylindre de guidage. Ainsi, en chirurgie, l'utilisation de robots est actuellement limitée au repérage d'une position initiale précise.

Un objet de la présente invention est de prévoir une nouvelle conception de robot permettant de faire suivre à un outil des trajectoires précises sans qu'il y ait de risque de gestes incontrôlés.

Un autre objet de la présente invention est de prévoir un robot dont les actions sont directement contrôlées par un opérateur sans mettre en oeuvre d'autres forces motrices que celles fournies par l'opérateur.

Un autre objet de la présente invention est de prévoir un robot permettant de guider passivement les gestes d'un opérateur.

Ces objets sont atteints grâce à un robot de guidage de gestes dont la force motrice est fournie par un opérateur qui manipule un outil solidaire du robot. Comme un robot classique, le robot de guidage est à plusieurs degrés de liberté (ou axes) respectivement associés à des capteurs de déplacement reliés à un système informatique dans lequel est mémorisée une trajectoire à suivre. Lorsque l'opérateur écarte l'outil de la trajectoire mémorisée, des dispositifs de blocage adéquats commandés par le système informatique et remplaçant les moteurs du robot empêchent tout éloignement supplémentaire de l'outil par rapport à la trajectoire. Ainsi, à tout instant, l'opérateur ne peut déplacer l'outil que selon la trajectoire mémorisée. Les dispositifs de blocage sont passifs, c'est-à-dire qu'ils sont tels qu'ils ne peuvent que s'opposer à un mouvement et non en provoquer un, ce qui supprime la possibilité de tout geste incontrôlé.

La présente invention vise plus particulièrement un robot tel que défini par les caractéristiques de la revendication 1.

Selon un mode de réalisation de la présente invention, le dispositif de détermination de sens autorise le déplacement selon le degré de liberté associé seulement dans un sens propre à faire pénétrer l'outil dans une zone autorisée, éventuellement réduite à un point, si l'outil franchit la frontière de la zone.

Selon un mode de réalisation de la présente invention, le dispositif de détermination de sens autorise le déplacement selon le degré de liberté associé seulement dans un sens propre à rapprocher l'outil de ladite trajectoire mémorisée selon une direction inclinée entre la normale à la trajectoire et la tangente à la trajectoire.

Selon un mode de réalisation de la présente invention, le dispositif de détermination de sens comprend deux roues libres de sens de rotation opposés et comprenant chacune un moyen commandé par le système informatique de couplage à un axe constituant le degré de liberté associé.

Selon un mode de réalisation de la présente invention, chaque moyen de couplage comprend un embrayage commandé par électro-aimant.

Selon un mode de réalisation de la présente invention, le robot comprend pour chaque degré de liberté un limiteur de vitesse de déplacement commandé par le système informatique.

La présente invention vise également un procédé de commande de robot tel que défini par les caractéristiques de la revendication 7.

Selon un mode de réalisation de la présente invention, le sens de déplacement selon chaque degré de liberté est déterminé par le signe d'une composante selon ce degré de liberté d'un vecteur de l'espace des déplacements selon les degrés de liberté, correspondant à un vecteur indiquant, dans l'espace des positions et des orientations de l'outil, ladite direction préférentielle.

Selon un mode de réalisation de la présente invention, la direction préférentielle est la direction normale à la frontière d'une zone autorisée, éventuellement réduite à un point, si l'outil franchit la frontière.

Selon un mode de réalisation de la présente invention, la direction préférentielle est comprise entre la normale et la tangente à la trajectoire mémorisée.

Ces objets, caractéristiques et avantages ainsi que d'autres de la présente invention seront exposés en détail dans la description suivante de modes de réalisation particuliers faite en relation avec les figures jointes parmi lesquelles :

la figure 1 représente un mode de réalisation d'axe de robot selon la présente invention ; et
les figures 2A et 2B représentent deux positions d'un robot deux axes selon l'invention pour illustrer son fonctionnement.

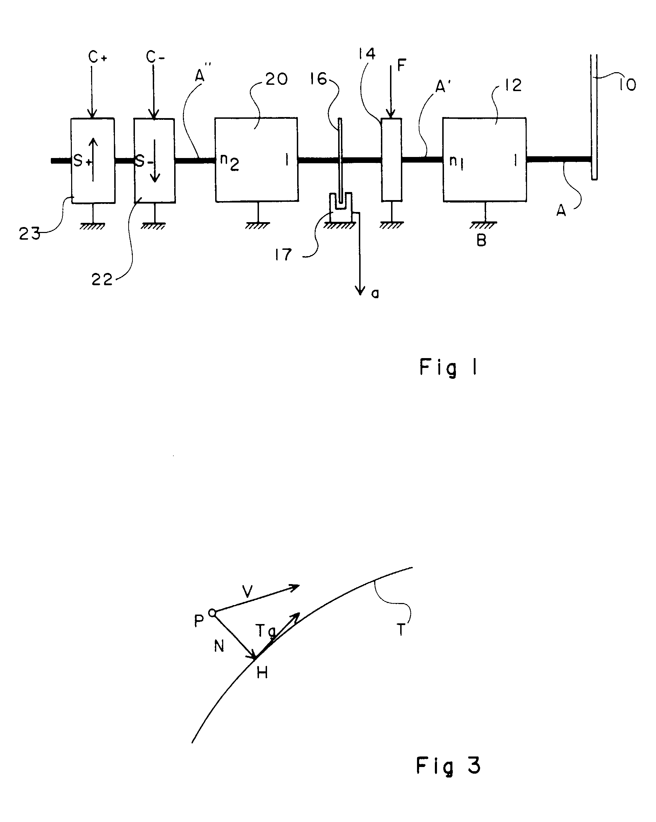

A la figure 1 est représenté un axe A d'un robot selon l'invention. Cet axe A est par exemple solidaire d'un bras 10 et relié à la sortie d'un premier réducteur 12 solidaire d'un bâti B formant partie, par exemple, d'un deuxième bras du robot. L'axe d'entrée A' du réducteur est relié à un frein 14 commandé par un signal F, à un capteur de position tel qu'une roue de codage 16 associée à un détecteur optique 17 fournissant un signal d'angle de rotation $a$, et à la sortie d'un deuxième réducteur 20. Un troisième réducteur est éventuellement prévu entre le frein et le capteur de position.

Les éléments décrits jusqu'à maintenant sont des éléments que l'on trouve classiquement dans des articulations de robot. Classiquement, l'axe d'entrée A" du réducteur 20 est relié à un moteur.

Selon un mode de réalisation de l'invention, l'axe A" est relié à deux roues libres débrayables 22, 23. La roue libre 22 autorise la rotation de l'axe A, par l'intermédiaire des réducteurs 12, 20, dans un seul sens S- lorsqu'un signal de commande C- est actif. La roue libre 23 autorise la rotation de l'axe seulement dans le sens contraire S+ lorqu'un signal de commande C+ est actif.

Lorsque le signal de commande C associé à une roue libre est inactif, la roue libre permet la rotation de l'axe A dans les deux sens.

Avec cette configuration, l'axe A peut assurer quatre fonctions :

- tourner librement dans les sens S+ et S- lorsque les signaux C+ et C- sont inactifs ;
- tourner seulement dans le sens S+ lorsque le signal C+ est actif et le signal C- inactif ;
- tourner seulement dans le sens opposé S- lorsque le signal C- est actif et le signal C+ inactif ; et
- rester bloqué si les signaux C+ et C- sont actifs.

Le frein 14 assure l'une ou l'autre de deux fonctions différentes, à savoir limiter la vitesse de rotation de l'axe A à une valeur déterminée par le signal F ou bien exercer un effort de freinage déterminé par le signal F. Le frein est un frein normalement bloqué afin de bloquer le robot en cas de panne de courant. De même, pour une double sécurité, les roues libres débrayables seront choisies normalement embrayées (les signaux C+ et C- sont actifs lorsque le courant est coupé). Afin de pouvoir déplacer le robot à la suite d'une panne de courant, les freins et les roues libres peuvent être prévus pour qu'on puisse les débloquer manuellement.

Comme exemple de roue libre débrayable normalement embrayée, on peut envisager une roue libre couplée à un embrayage commandé par électro-aimant au débrayage.

Un système informatique non représenté stocke des données telles que des points d'une trajectoire ou d'une surface. En fonction des signaux $a$ fournis par les capteurs de rotation 16, 17 de chaque axe du robot, il fournit les signaux de commande C+ et C- des roues libres et F des freins de chaque axe du robot pour réaliser les fonctions décrites ci-après.

Un robot selon la présente invention est prévu pour fonctionner selon deux modes principaux que l'on appellera ci-après "mode région" et "mode suivi orienté". Le mode région autorise un opérateur à déplacer un outil dans une zone délimitée par des surfaces. Le mode suivi orienté contraint l'opérateur à suivre de près une trajectoire dans un sens prédéfini.

Un robot selon l'invention peut être utilisé par un chirurgien devant effectuer, par exemple, un trait de scalpel précis. Le trait de scalpel est alors mémorisé en tant que trajectoire. Lors d'une phase d'approche vers la trajectoire, le chirurgien peut d'abord déplacer le scalpel en toute liberté jusqu'à une certaine distance du patient ; le robot est alors utilisé selon le mode région en définissant une zone autorisée de grandes dimensions. Le chirurgien doit ensuite engager le scalpel dans une zone autorisée en entonnoir qui aboutit au début de la trajectoire. La trajectoire peut alors être suivie selon le mode suivi orienté ou bien selon le mode région en définissant une zone en tunnel étroit autour de la trajectoire.

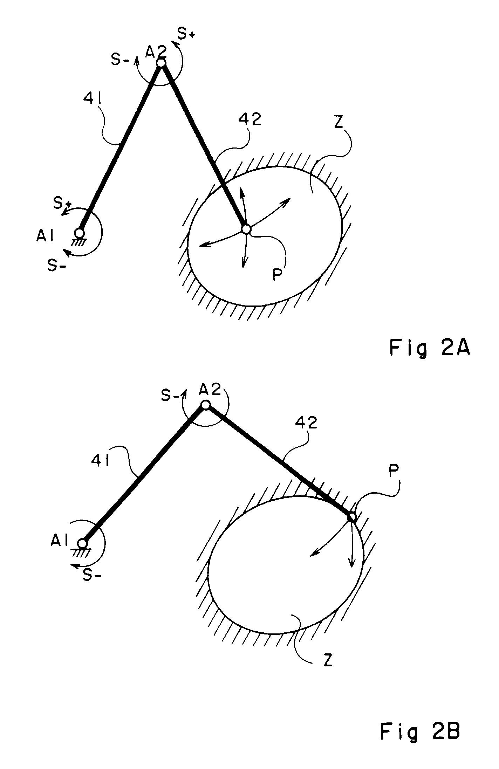

Les figures 2A et 2B illustrent deux positions d'un robot deux axes commandé selon le mode région pour imposer à un point P du robot de rester dans une zone Z. Cette zone est bidimensionnelle et délimitée par des courbes frontière mémorisées dans le système informatique. Le robot comprend un premier axe $A_1$ selon l'invention articulant un premier bras 41 sur un bâti. Un deuxième bras 42 est articulé à l'extrémité libre du bras 41 par un deuxième axe $A_2$ selon l'invention. Le point P est à l'extrémité libre du bras 42.

Le système informatique calcule en permanence la position de l'extrémité P en se servant des indications fournies par les capteurs des axes $A_1$ et $A_2$ ainsi que des longueurs des bras 41 et 42 selon la relation P = f (A) précédemment mentionnée.

Dans la figure 2A, l'extrémité P est dans la zone autorisée Z et les axes $A_1$ et $A_2$ sont chacun commandés pour laisser une libre rotation dans les deux sens S+ et S-. Ainsi l'extrémité P peut être déplacée librement dans n'importe quelle direction.

A la figure 2B, l'extrémité P franchit la frontière de la zone Z. On commande alors chacun des axes $A_1$ et $A_2$ pour autoriser une rotation respective seulement dans un sens propre (S- pour les deux axes) à faire pénétrer l'extrémité P dans la zone Z.

Avec le fonctionnement décrit ci-dessus, un opérateur ne peut déplacer l'extrémité P qu'à l'intérieur de la zone Z, toute tentative de sortie de cette zone étant immédiatement détectée et empêchée en commandant les roues libres adéquates des axes $A_1$ et $A_2$.

Une commande réelle du robot présente un temps de réponse (temps de calcul des positions et de réaction des roues libres débrayables) qui ne lui permet pas tout de suite de détecter si le point à contrôler P a atteint une position limite et de réagir instantanément. Ainsi, selon la vitesse de déplacement du point, celui-ci pourra, avant détection, dépasser plus ou moins la position limite. On comprend ici le rôle du limiteur de vitesse 14 ; en limitant la vitesse à une valeur connue et en connaissant le temps de réponse, on connaîtra la valeur maximale du dépassement. Ce dépassement pourra donc être ajusté en réglant la vitesse limite.

Pour des raisons de simplification, on s'est placé dans les figures 2A et 2B dans un cas plan. Dans un cas réel, la zone limite Z est tri-dimensionnelle si l'on veut contrôler la position d'un point, et de dimension 6 si l'on veut également contrôler l'orientation d'un outil.

Ainsi, plus généralement, le "mode région" consiste à mémoriser des surfaces limites tout à fait quelconques à l'intérieur desquelles l'outil est autorisé à se déplacer librement. De préférence, les surfaces limites seront décomposées en surfaces simples, telles que des plans, des portions de cylindre, des portions de sphère... Le système informatique calcule alors en permanence la distance minimale entre l'outil et une surface limite. Si l'outil atteint ou franchit une surface limite, il faut commander les axes du robot de sorte que l'outil ne puisse être déplacé que vers l'intérieur de la surface limite.

Si l'on veut contrôler le déplacement d'un outil selon n degrés de liberté (n≤6), les surfaces limites sont des surfaces de dimension n-1 (hypersurfaces de l'espace de dimension n). Ci-après, des termes tels que "point", "position", "trajectoire"... seront relatifs à l'espace de dimension n, c'est-à-dire, par exemple, qu'un point définit la position et l'orientation d'un outil. Pour commander les différents axes du robot en cas de franchissement d'une hypersurface limite on pourra procéder de la manière suivante.

On détermine d'abord la normale à la surface limite qui est définie comme la droite passant par le point P de position courante de l'outil et le point H de la surface limite, le plus proche du point P. On déduit de cette normale un vecteur N orienté vers l'intérieur de la surface limite. On applique ensuite la relation

$$A_N = [J^{-1}] \, N$$

où $[J^{-1}]$ est la matrice inverse de la matrice $[J]$, précédemment mentionnée, liant une variation de position dP à une variation dA des variables articulaires A.

On obtient ainsi un ensemble $A_N$ de valeurs d'angles de rotation ;

- si une valeur est positive, l'axe correspondant est autorisé à ne tourner que dans un sens positif,
- si une valeur est négative, l'axe correspondant est autorisé à ne tourner que dans le sens négatif, et
- si une valeur est nulle, l'axe correspondant est bloqué.

Le nombre n de degrés de liberté du robot à commander effectivement selon l'invention peut être inférieur au nombre total. Dans ce cas, les degrés de liberté restants sont bloqués ou libres, par exemple si l'on veut respectivement empêcher ou autoriser en continu une libre rotation de l'outil autour d'un axe.

La figure 3 représente comment procéder selon le mode suivi orienté pour suivre une trajectoire mémorisée T, considérée également dans l'espace de dimension n. On opère selon les étapes suivantes effectuées selon une boucle infinie :

- calculer la position courante P de l'outil ;
- trouver un vecteur N passant par la position P, normal à la trajectoire, et orienté vers la trajectoire ;
- trouver un vecteur Tg orthogonal au vecteur N (tangent à la trajectoire) et orienté dans la direction voulue ;
- calculer un vecteur V combinaison linéaire à coefficients positifs des vecteurs N et Tg et
- calculer un ensemble $A_V$ de valeurs d'angles de rotation des axes du robot en appliquant la matrice jacobienne inverse $[J^{-1}]$ au vecteur V.

On obtient ainsi un ensemble $A_V$ de valeurs d'angles. On applique à cet ensemble de valeurs les règles définies précédemment pour l'ensemble $A_N$. Il en résulte que l'outil peut, à partir de la position courante, être déplacé selon le sens voulu (Tg) et vers (N) la trajectoire.

Les coefficients liant le vecteur V aux vecteurs N et Tg pourront dépendre de l'écart entre la position P et la trajectoire, de sorte que si l'écart est grand, le vecteur V est de direction proche de celle du vecteur N, et si l'écart est faible, le vecteur V est de direction proche de celle du vecteur Tg.

Selon une variante des procédés décrits permettant d'accélérer les temps de calcul, les surfaces limite et les trajectoires sont préalablement mémorisées dans l'espace des variables articulaires. Pour cela, on applique à des points P convenablement choisis des surfaces et des trajectoires considérées dans l'espace des positions et des orientations (des points manquants étant interpolés si nécessaire) le calcul $A = f^{-1}(P)$, où $f^{-1}$ est la fonction inverse de la fonction f précédemment mentionnée. Il n'est alors pas nécessaire, pour déterminer les sens de rotation des axes, de calculer en temps réel les matrices J et leurs matrices inverses respectives. En effet, les sens de rotation des axes sont alors directement fournis par les signes des composantes des vecteurs N (pour le mode région) et V (pour le mode suivi orienté), ces vecteurs étant déterminés selon les étapes susmentionnées appliquées dans l'espace des variables articulaires.

Un robot selon l'invention pourra également être utilisé pour qu'un opérateur amène un outil vers une position précise $P_O$. A la position $P_O$ correspond un ensemble de valeurs $a_{Oj}$ des angles de rotation des axes. Le sens de rotation de chaque axe $A_j$, tant que la position n'est pas atteinte, est déterminé par le signe de l'expression $a_{Oj} - a_j$, où $a_j$ est la valeur courante de l'angle de rotation de l'axe $A_j$. Ce mode d'utilisation peut être comparé au mode région dont la zone autorisée est réduite au point $P_O$ à atteindre.

Pour faciliter le suivi de la trajectoire par l'opérateur, on pourra fournir à l'opérateur une information de position sous diverses formes (sonore, visuelle). On pourra, par exemple, afficher sur un écran la trajectoire mémorisée ainsi que la position courante de l'outil. En outre, pour donner une sensation de guidage plus prononcée, on pourra commander les freins 14 de sorte que leur force de freinage soit proportionnelle, par exemple, à l'écart de position par rapport à la trajectoire.

Un robot selon la présente invention pourra comprendre un ensemble de bras légers permettant d'assurer la trajectoire précise et un ensemble de bras robustes permettant d'assurer la phase d'approche du robot, ces bras robustes étant bloqués, éventuellement par rapport à un dispositif de repérage de la position d'un patient, une fois l'approche effectuée.

Le système informatique de commande pourra se repérer par rapport au patient à l'aide de systèmes connus, tels que ceux déjà utilisés en neuro-chirurgie pour positionner un cylindre de guidage d'aiguille par rapport à la tête du patient.

La présente invention a été décrite à l'aide de robots à axes de rotation. Bien entendu, elle s'applique de la même manière à des robots comprenant des axes de translation.

L'homme du métier saura programmer le système informatique afin de commander adéquatement les axes selon l'invention en fonction du calcul de position et de la trajectoire mémorisée à respecter. Il saura également choisir ou réaliser les roues libres débrayables.

De nombreuses variantes et modifications de la présente invention apparaîtront à l'homme de l'art. Celui-ci pourra trouver de nombreux procédés de commande équivalents à ceux décrits. Par exemple, pour suivre une trajectoire T, à partir de la position de la figure 2A, on peut également bloquer l'un des axes, par exemple $A_1$, et laisser libre l'axe $A_2$ afin de déplacer l'extrémité 43 selon un arc de cercle jusqu'à la limite T2 Lorsque la limite T2 est atteinte, on bloque l'axe $A_2$ et on libère l'axe $A_1$ afin que l'on puisse déplacer l'extrémité 43 jusqu'à la limite T1 où on bloque de nouveau l'axe $A_1$ et où on libère l'axe $A_2$...

De nombreuses applications non décrites pourront être trouvées pour un robot selon l'invention, notamment en rééducation, pour l'apprentissage de gestes... l'outil mentionné étant alors, par exemple, une sangle attachée à un membre.

## Revendications

1. Robot de guidage à plusieurs degrés de liberté (A) dont chacun a deux sens de déplacement (S+, S-), comprenant

   - un outil fixé à une extrémité de la structure, cet outil étant prévu pour être déplacé manuellement et exclusivement par un opérateur ;
   - des capteurs de déplacement (16, 17) associés respectivement aux degrés de liberté de la structure, reliés à un système informatique prévu pour stocker une trajectoire (T), pour calculer la position dudit outil à partir des informations fournies par les capteurs, et pour fournir pour chaque degré de liberté un signal de commande (C+, C-) ayant quatre valeurs possibles en fonction de la position de l'outil par rapport à ladite trajectoire ; et
   - un dispositif de blocage (22, 23) associé à chaque degré de liberté pour :

      - autoriser un déplacement dans les deux sens du degré de liberté si le signal de commande associé a une première valeur ;
      - autoriser un déplacement seulement dans le premier sens du degré de liberté si le signal de commande associé a une deuxième valeur ;

- autoriser un déplacement seulement dans le deuxième sens du degré de liberté si le signal de commande a une troisième valeur ; et
- n'autoriser aucun déplacement selon le degré de liberté si le signal de commande a une quatrième valeur.

2. Structure selon la revendication 1, caractérisée en ce que le dispositif de blocage (22, 23) autorise le déplacement selon le degré de liberté associé seulement dans un sens propre à faire pénétrer l'outil dans une zone autorisée (Z), éventuellement réduite à un point, si l'outil franchit la frontière de ladite zone.

3. Structure selon la revendication 1, caractérisée en ce que le dispositif de blocage (22, 23) autorise le déplacement selon le degré de liberté associé seulement dans un sens propre à rapprocher l'outil de ladite trajectoire mémorisée (T) selon une direction (V) inclinée entre la normale (N) à la trajectoire et la tangente (Tg) à la trajectoire.

4. Structure selon la revendication 1, caractérisée en ce que ledit dispositif de blocage comprend deux roues libres de sens de rotation opposés et comprenant chacune un moyen commandé par le système informatique de couplage à un axe constituant le degré de liberté associé.

5. Structure selon la revendication 4, caractérisée en ce que chaque moyen de couplage comprend un embrayage commandé par électro-aimant.

6. Structure selon la revendication 1, caractérisée en ce qu'elle comprend pour chaque degré de liberté un limiteur de vitesse de déplacement (14) commandé par le système informatique.

7. Procédé de commande d'un robot de guidage à plusieurs degrés de liberté dont chacun est associé à un capteur de déplacement (16, 17), pouvant faire suivre à un outil solidaire d'une extrémité de la structure une trajectoire (T) mémorisée dans un système informatique, caractérisé en ce qu'il comprend les étapes suivantes :

- déplacer l'outil manuellement et exclusivement par un opérateur ;
- calculer la position courante (P) de l'outil et déterminer en fonction de cette position une direction préférentielle (N, V) à faire suivre à l'outil ainsi qu'un signal de commande (C+,C-) ayant quatre valeurs possibles;
- autoriser un déplacement dans les deux sens du degré de liberté si le signal de commande associé a une première valeur ;

- autoriser un déplacement seulement dans le premier sens du degré de liberté si le signal de commande associé a une deuxième valeur ;
- autoriser un déplacement seulement dans le deuxième sens du degré de liberté si le signal de commande a une troisième valeur ; et
- n'autoriser aucun déplacement selon le degré de liberté si le signal de commande a une quatrième valeur.

8. Procédé de commande selon la revendication 7, caractérisé en ce que le sens de déplacement selon chaque degré de liberté est déterminé par le signe d'une composante selon ce degré de liberté d'un vecteur ($A_N$, $A_V$) de l'espace des déplacements selon les degrés de liberté, correspondant à un vecteur (N, V) indiquant, dans l'espace des positions et des orientations de l'outil, ladite direction préférentielle.

9. Procédé de commande selon la revendication 7, caractérisé en ce que ladite direction préférentielle est la direction normale (N) à la frontière d'une zone autorisée (Z), éventuellement réduite à un point, si l'outil franchit ladite frontière.

10. Procédé de commande selon la revendication 7, caractérisé en ce que ladite direction préférentielle (N, V) est comprise entre la normale (N) et la tangente (Tg) à ladite trajectoire mémorisée.

**Patentansprüche**

1. Führungsroboter, mit mehreren Freiheitsgraden (A), wobei jeder Freiheitsgrad zwei Bewegungsrichtungen (S+, S) umfaßt, mit folgenden Merkmalen:

- einem Werkzeug, das an einem Ende der Struktur angebracht ist, wobei dieses Werkzeug manuell und ausschließlich durch eine Bedienungsperson bewegbar ist;
- Bewegungssensoren (16, 17), die den jeweiligen Freiheitsgraden der Struktur zugeordnet sind und die mit einem Rechnersystem zum Speichern einer Trajektorie (T) verbunden sind, um die Position des Werkzeuges mit Hilfe der Information der Sensoren zu berechnen und um für jeden Freiheitsgrad ein Steuersinal (C+, C-) mit vier möglichen Werten vorzusehen, wobei diese Werte abhängig von der Position des Werkzeuges in Bezug auf die Trajektoire sind; und
- einer Blockiervorrichtung (22, 23) für jeden Freiheitsgrad, um

eine Bewegung in den zwei Richtungen des Freiheitsgrades zuzulassen, wenn das zugehörige Steuersignal einen ersten Wert aufweist;

eine Bewegung nur in der ersten Richtung des Freiheitsgrades zuzulassen, wenn das zugehörige Steuersignal einen zweiten Wert aufweist;

eine Bewegung nur in der zweiten Richtung des Freiheitsgrades zuzulassen, wenn das Steuersignal einen dritten Wert aufweist; und

keine Bewegung entlang des Freiheitsgrades zuzulassen, wenn das Steuersignal einen vierten Wert aufweist.

2. Struktur gemäß Anspruch 1, dadurch **gekennzeichnet**, daß die Blockiervorrichtung (22, 23) die Bewegung entlang des entsprechenden Freiheitsgrades nur in einer Richtung zuläßt, die geeignet ist, das Werkzeug dazu zu bringen, in einen autorisierten Bereich (Z) einzudringen, der auf einen einzelnen Punkt begrenzt sein kann, wenn sich das Werkzeug über die Bereichsgrenze hinausbewegt.

3. Struktur gemäß Anspruch 1, dadurch **gekennzeichnet**, daß die Blockiervorrichtung (22, 23) die Bewegung entlang des entsprechenden Freiheitsgrades nur in einer Richtung zuläßt, die geeignet ist, das Werkzeug näher an die gespeicherte Trajektorie (T) entlang einer Richtung (V) zu bringen, die zwischen der Normalen (N) und der Tangente (Tg) der Trajektorie liegt.

4. Struktur gemäß Anspruch 1, dadurch **gekennzeichnet**, daß die Blockiervorrichtung (22, 23) zwei Freiläufe mit entgegengesetzten Drehrichtungen aufweist, wobei jeder Freilauf eine rechnergesteuerte Vorrichtung für die Ankopplung an eine Achse, die den zugehörigen Freiheitsgrad bildet, aufweist.

5. Struktur gemäß Anspruch 4, dadurch **gekennzeichnet**, daß jede Kopplungsvorrichtung eine Kupplung umfaßt, die durch einen Elektromagneten gesteuert wird.

6. Struktur gemäß Anspruch 1, dadurch **gekennzeichnet**, daß sie für jeden Freiheitsgrad eine rechnergesteuerte Geschwindigkeits-Begrenzungsvorrichtung (14) vorsieht.

7. Steuerungsverfahren eines Führungsroboters, der mehrere Freiheitsgrade aufweist, wobei jedem Freiheitsgrad ein Bewegungssensor (16, 17) zugeordnet ist, der dazu dient, ein Werkzeug, das einstückig mit einem Ende der Struktur ausgebildet ist, einer Trajektorie (T) folgen zu lassen, die in einem Rechnersystem gespeichert ist,

**gekennzeichnet** durch die folgenden Verfahrensschritte:

- Bewegen eines Werkzeuges manuell und ausschließlich durch eine Bedienungsperson;
- Berechnen der aktuellen Position (P) des Werkzeuges, und als Funktion dieser Position, Bestimmen einer bevorzugten Richtung (N, V), der das Werkzeug folgen soll und eines Steuersignals (C+, C-), das vier mögliche Werte aufweist;
- Zulassen einer Bewegung in den zwei Richtungen des Freiheitsgrades, wenn das zugehörige Steuersignal einen ersten Wert aufweist;
- Zulassen einer Bewegung nur in der ersten Richtung des Freiheitsgrades, wenn das zugehörige Steuersignal einen zweiten Wert aufweist;
- Zulassen einer Bewegung nur in der zweiten Richtung des Freiheitsgrades, wenn das Steuersignal einen dritten Wert aufweist; und
- Zulassen keiner Bewegung entlang des Freiheitsgrades, wenn das Steuersignal einen vierten Wert aufweist.

8. Steuerungsverfahren gemäß Anspruch 7, dadurch **gekennzeichnet**, daß die Bewegungsrichtung entlang jedes Freiheitsgrades durch das Vorzeichen einer Komponente eines Vektors ($A_N$, $A_V$) des Bewegungsraums entlang der Freiheitsgrade abhängig von diesem Freiheitsgrad bestimmt wird, der einem Vektor (N, V) entspricht, der die bevorzugte Richtung innerhalb des Raums der Positionen und Ausrichtungen des Werkzeuges anzeigt.

9. Steuerungsverfahren nach Anspruch 7, dadurch **gekennzeichnet**, daß die bevorzugte Richtung die Normale (N) zu der Grenze eines autorisierten Bereichs (Z) darstellt, der auf einen einzelnen Punkt begrenzt sein kann, wenn sich das Werkzeug über die Grenze hinaus bewegt.

10. Steuerungsverfahren gemäß Anspruch 7, dadurch **gekennzeichnet**, daß die bevorzugte Richtung (N, V) zwischen der Normalen (N) und der Tangente (Tg) der gespeicherten Trajektorie liegt.

**Claims**

1. Guiding robot having several degrees of freedom (A), each degree of freedom having two movement directions (S+, S-), comprising:

- a tool fixed to an end of the structure, this tool being adapted to be moved manually and exclusively by an operator;
- movement sensors (16, 17) associated respectively to the degrees of freedom of the structure, coupled to a computer for storing a path (T), for calculating the position of said tool from the information provided by the sensors, and for providing, for each degree of freedom, a control signal (C+, C-) having four possible values depending on the position of the tool with respect to said path; and
- a blocking device (22, 23) associated to each degree of freedom for:

   allowing movement in the two directions of the degree of freedom if the associated control signal has a first value; allowing movement only in the first direction of the degree of freedom if the associated control signal has a second value; allowing movement only in the second direction of the degree of freedom if the control signal has a third value; and allowing no movement about the degree of freedom if the control signal has a fourth value.

2. Structure according to claim 1, characterized in that said blocking device (22, 23) allows movements about the associated degree of freedom only in a direction suitable to urge the tool to penetrate into an authorized area (Z), that may be limited to a single point, if said tool moves beyond the area boundary.

3. Structure according to claim 1, characterized in that said blocking device (22, 23) allows movements according to the associated degree of freedom only in a direction suitable to bring the tool closer to said stored path (T) along a direction (V) comprised between the normal (N) and the tangent (Tg) to the path.

4. Structure according to claim 1, characterized in that said blocking device (22, 23) includes two free wheels having opposite rotation directions, each including a means controlled by the computer, for coupling to an axis constituting the associated degree of freedom.

5. Structure according to claim 4, characterized in that each coupling means includes a clutch controlled by a solenoid.

6. Structure according to claim 1, characterized in that it includes, for each degree of freedom, a speed limiting means (14), controlled by the computer.

7. Method for controlling a guiding robot having several degrees of freedom, each degree of freedom being associated to a movement sensor (16, 17), operable for making a tool integral with an end of the structure follow a path (T) stored in a computer, characterized in that it comprises the following steps:

- moving the tool manually and exclusively by an operator;
- calculating the current position (P) of the tool and determining as a function of this position a preferential direction (N, V) to be followed by the tool as well as a control signal (C+, C-) having four possible values;
- allowing movement in the two directions of the degree of freedom if the associated control signal has a first value;
- allowing movement only in the first direction of the degree of freedom if the associated control signal has a second value;
- allowing movement only in the second direction of the degree of freedom if the control signal has a third value; and
- allowing no movement about the degree of freedom if the control signal has a fourth value.

8. Control method according to claim 7, characterized in that the movement direction according to each degree of freedom is determined by the sign of a component according to this degree of freedom of a vector ($A_N$, $A_V$) of the space of movements according to the degrees of freedom, corresponding to a vector (N, V) indicating said preferential direction, within the space of positions and orientations of the tool.

9. The control method of claim 7, wherein said preferential direction is the normal (N) to the boundary of an authorized area (Z), that may be limited to a single point, if the tool moves beyond the boundary.

10. The control method of claim 7, wherein said preferential direction (N, V) is comprised between the normal (N) and the tangent (Tg) to said stored path.

Fig 1

Fig 3

Fig 2A

Fig 2B